# EUROPEAN PATENT SPECIFICATION

(11) **EP 2 457 433 B1**
(45) Date of publication and mention of the grant of the patent: **07.11.2018**
(21) Application number: 12154677.4
(22) Date of filing: 26.09.2008
(51) Int. Cl.: A01D 78/10

(54) **Haymaking machine**
Heuerntemaschine
Machine à fenaison

(30) Priority: 09.11.2007 NL 1034660
(43) Date of publication of application: 30.05.2012
(62) Divisional of application: 08075784.2
(73) Proprietor: Lely Patent N.V., 3147 PB Maassluis (NL)
(72) Inventor: Stremmelaar, Egbert Antonie, 7846 AD Noord-Sleen (NL)
(74) Representative: AGCO Intellectual Property Department

(56) References cited:
- EP-A1- 1 665 922
- DE-C1- 19 716 379
- NL-C2- 1 022 564
- NL-C2- 1 033 091

## Description

The invention relates to a haymaking machine according to the preamble of claim 1.

From Dutch patent publication NL 1 022 564 a haymaking machine is known. This haymaking machine comprises an elongate main frame which has a front end that is arranged to be attached to a pulling vehicle. The haymaking machine further comprises two crop processing members which are rotatable about an axis and which are each attached to a supporting arm. The supporting arms are symmetrically disposed relative to the main frame and each supporting arm is pivotably connected to the main frame in order to be able to pivot the crop processing member between an operative position and a transport position.

In the operative position of the supporting arm, the rotatable axis of the crop processing member is substantially perpendicular to the ground, so that crop processing elements which are rotated about the axis are able to process crops standing or lying on the ground, such as grass or hay. For example, the crop processing elements are rake elements which are arranged to rake together, by rotation about the axis, hay which is located on the ground.

In the transport position, the supporting arm is tilted upward, in which case the axis extends substantially parallel to the ground. In this transport position, the crop processing elements are substantially in a vertical plane. In such a position, the crop processing members and the crop processing elements occupy a space which is favourable for transport.

In general, it is desirable to make the working range of the crop processing members in the operative position as large as possible. In this case, the working range of the crop processing members is also determined by the distance at which the axis of the crop processing member is located relative to the main frame in the operative position.

However, in the transport position, it is on the contrary desirable to keep the dimensions of the haymaking machine limited in order thus to keep the haymaking machine compact during transport. For transport, in particular width and height are important dimensions. Moreover, in many countries the maximum dimensions of an agricultural machine during transport are laid down. Such fixed dimensions are, for example, a maximum height of four metres and a maximum width of three metres, and should not be exceeded in case of transport over the public highway.

The invention aims at providing a haymaking machine which may have a large working width in the operative position, but which has limited dimensions in the transport position.

The invention provides a haymaking machine comprising:
- an elongate main frame which has a front end that is arranged to be attached to a pulling vehicle in order to move the haymaking machine in a customary direction of travel,
- at least one crop processing member which is rotatable about an axis, and
- a supporting arm which is connected to the at least one crop processing member and which is pivotably connected to the main frame about a hinge line, wherein the crop processing member, by the pivoting movement of the supporting arm about the hinge line, is at least displaceable between an operative position and a transport position,
wherein the supporting arm comprises a first portion and a second portion, wherein the first portion is rotatably connected to the main frame in order to be able to move the supporting arm between the operative position and the transport position, and wherein the second portion is tiltably attached to the first portion, and wherein by the tilting of the second portion relative to the first portion the distance between the axis and the main frame can be changed,
wherein a steering rod is provided between the main frame and the second portion, characterised in that a steering rod hinge line of a pivot point between the steering rod and the main frame extends substantially parallel to, but does not coincide with, the hinge line of the supporting arm, in such a manner that, by tilting the supporting arm from the transport position to the operative position, the second portion is tilted relative to the first portion in order to move the crop processing member over a particular distance away from the hinge line.

In order to achieve maximum use of the available height in the transport position, it is desirable to place the crop processing members relatively low in the transport position, while this is not desirable in the operative position.

The relative position of the crop processing members is set by composing the supporting arm of two portions, wherein the first portion is rotatably connected to the main frame in order to be able to move the supporting arm between the operative position and the transport position, and wherein the second portion is tiltably attached to the first portion, and wherein by the tilting of the second portion relative to the first portion the distance between the axis and the main frame can be changed. The crop processing member is then connected to the second portion.

There is provided a steering rod between the main frame and the second portion in order to set the position of the second portion relative to the first portion. In order to enable the tilting of the supporting arm between the operative position and the transport position, also the steering rod is connected, pivotably about a steering rod hinge line, to the main frame. This steering rod hinge line extends substantially parallel to the hinge line of the first portion of the supporting arm.

By not having the steering rod hinge line coincide with the hinge line of the first portion, but positioning it in such a manner that, by tilting the supporting arm from the transport position to the operative position, the second portion is tilted relative to the first portion in order to move the crop processing member over a particular distance away from the hinge line, the relative position of the crop processing member relative to the first portion of the supporting arm can be adapted during the tilting of the supporting arm between the operative position and the transport position.

By designing the steering rod as an actuator, it is possible to tilt the second portion relative to the first portion by operating the actuator in the operative position and thus to set the working width of the haymaking machine.

The invention will hereinafter be explained in further detail, under reference to the accompanying drawing in which:
Figure 1 shows a top view of a haymaking machine according to the invention, wherein the supporting arms are placed in the operative position;
Figure 2 shows a side view of the haymaking machine of Figure 1;
Figure 3 shows an enlarged top view of a supporting arm of the haymaking machine of Figure 1;
Figure 4 shows a top view of a haymaking machine according to the invention, wherein the supporting arms are placed in the transport position;
Figure 5 shows a side view of the haymaking machine of Figure 4, wherein the supporting arms are placed in the transport position, and
Figure 6 shows a top view of a supporting arm according to Figure 3, wherein the crop processing member is placed in a large-working-width position.

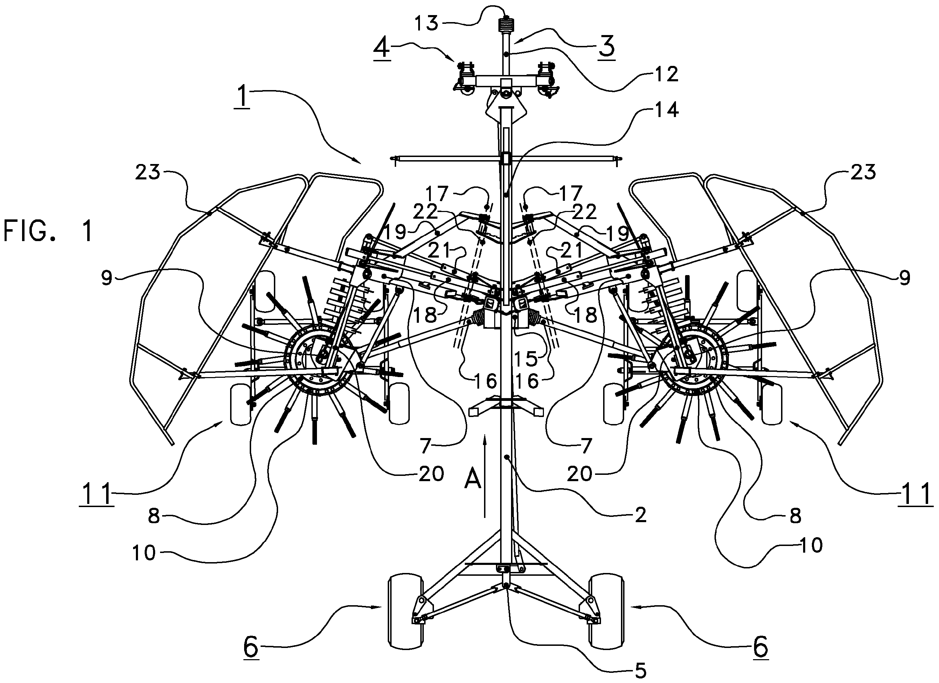

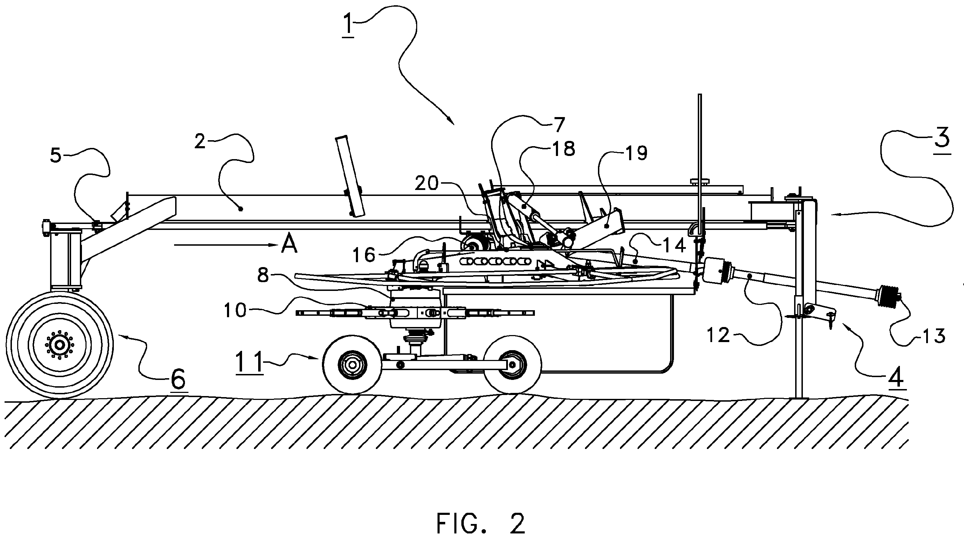

Figures 1 to 5 show top and side views of a haymaking machine according to the invention, denoted in the whole by reference numeral 1. The haymaking machine 1 has an elongate main frame 2. At a front end 3 of the main frame 2 there is provided a device 4 for coupling the haymaking machine 1 to a pulling vehicle such as a tractor (not shown). At the rear end 5 of the main frame 2 there is provided a main wheel set 6 for supporting the haymaking machine 1. When coupled to a tractor or the like, the haymaking machine 1 will be moved during use in a customary direction of travel denoted by an arrow A, which direction of travel substantially coincides with the longitudinal direction of the main frame 2.

On the main frame 2 there are attached two supporting arms 7 which each support a crop processing member 8. The two supporting arms 7 with crop processing members 8 are substantially symmetrically disposed relative to the main frame 2. The crop processing members 8 are rotatably disposed about an axis 9 attached to the respective supporting arm 7. The crop processing members 8 comprise a rotatable main body 10 having a number of crop processing elements (not shown), such as rakes or the like, which are disposed in parallel configuration around the circumference of the main body 10. In the embodiment shown, there is provided a wheel set 11 at each of the supporting arms 7 for supporting the crop processing members 8 during use. In an alternative embodiment, such a wheel set 11 may be omitted.

The crop processing members 8 are drivable by means of a drive mechanism 12. The drive mechanism 12 comprises a coupling 13 which may be connected to the pulling vehicle near the front end 3 of the main frame 2. The coupling 13 drives a central shaft 14 which connects to a gearbox 15 that is attached to the main frame 2. A telescopic coupling shaft 16 extends from the gearbox 15 to the relevant crop processing member 8 for driving the latter.

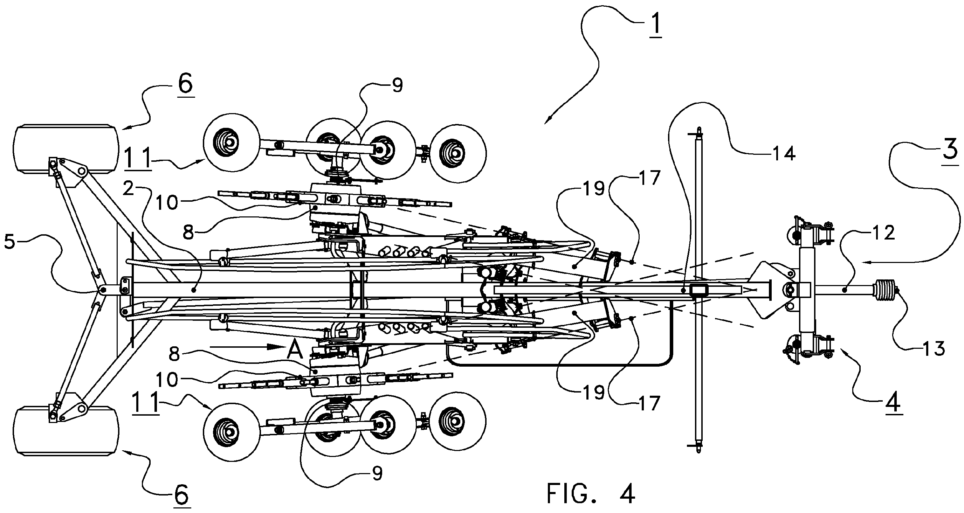

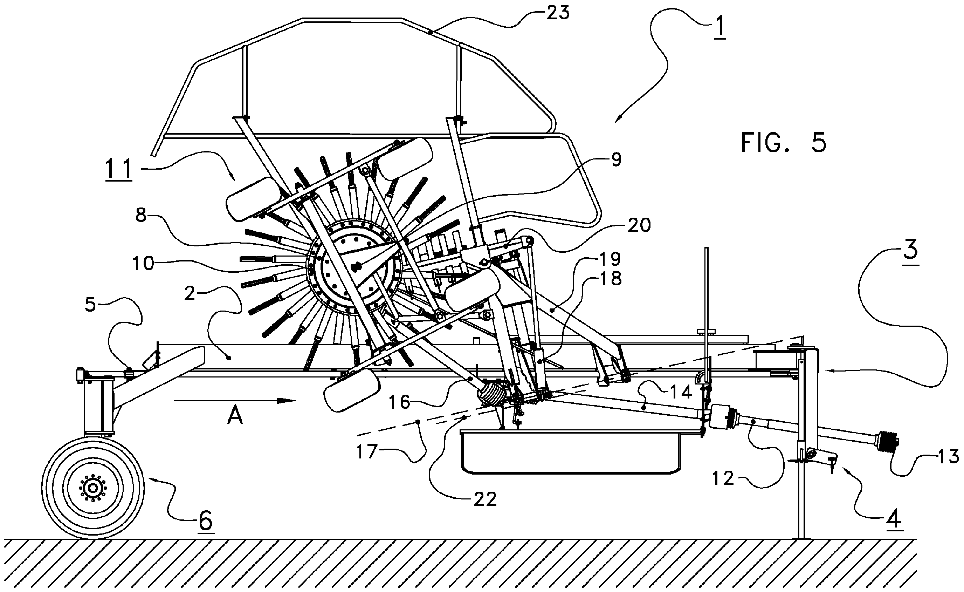

Each supporting arm 7 is disposed, pivotably about a hinge line 17, in such a manner that the crop processing members are movable between an operative position (Figures 1 to 3) in which the crop processing members 8 are placed near the ground and the axis 9 thereof is substantially perpendicular to the ground, and a transport position (Figures 4 and 5) in which the supporting arm 7 is tilted upward, and the axis 9 of the crop processing member 8 extends substantially parallel to the ground.

There is provided an actuator 18 in order to move the supporting arm 7 between the transport position and the operative position. The actuator 18 is, for example, a hydraulic or pneumatic cylinder. In the transport position, it is important that the entire haymaking machine 1 is substantially between the maximum dimensions, often established by competent authorities and public bodies, to be met by such machines during transport. In certain countries, for example, the machine may have a maximum height of four metres and a maximum width of three metres in the transport position. For the relatively large crop processing members 8 it is important to be optimally placed in the operative position in order thus to remain within the established dimensions.

In the operative position it is advantageous, on the contrary, that the crop processing members 8 can reach a largest possible working width. In this case it is desirable that the working width of the crop processing members 8 is adjustable. In order to be able to adjust the working width, each supporting arm 7 comprises a first portion 19 which is rotatably connected to the main frame 2 in order to displace the supporting arm 7 between the operative position and the transport position, and a second portion 20 which is rotatably connected to the first portion 19 and which supports the crop processing member 8. By tilting the second portion 20 relative to the first portion 19, the working width, i.e. the distance from the axis 9 to the main frame 2, of the relevant crop processing member 8 can be adjusted. For this purpose, there is provided a second actuator 21 by means of which the position of the second portion 20 relative to the first portion 19 can be changed. The second actuator 21 is, for example, a hydraulic or pneumatic cylinder.

Advantageously, the hinge line 17 is obliquely disposed in two directions relative to the customary direction of travel A. As a result, it is possible to obtain a larger maximum working width without the maximum dimensions being exceeded in the transport position. In particular, the hinge line 17 extends in the direction of the customary direction of travel A of the main frame 2, i.e. to the front side of the main frame 2, towards the main frame 2 and upward relative to the main frame 2. In other words, the hinge line 17 intersects the symmetry plane of the haymaking machine 1 for the location(s) where the respective supporting arm 7 is connected to the main frame 2 and intersects the ground behind the place(s) where the respective supporting arm 7 is connected to the main frame 2.

The advantage of having the hinge line 17 extend upward in the direction of the front side of the main frame 2 is that the supporting arm 7 in the folded-in transport position will have less height in comparison with the width in the operative position. This makes it possible to obtain a relatively large working width, while the height in the operative position can be limited at the same time.

Moreover, in the embodiment shown, the telescopic coupling shaft 16 will have a less great difference in length between the operative position and the transport position. This has the advantage that, in the transport position, the coupling shaft 16 can be compactly included in the machine 1, while the latter still functions reliably in the folded-out operative position. For, when such a telescopic shaft is extended too far, this may endanger a reliable functioning. In particular, it is important that the telescopic parts of the telescopic coupling shaft 16 maintain a minimum overlap during operation.

In order to enable a pivoting movement of the supporting arm 7, the second actuator 21 is pivotably disposed about a steering rod hinge line 22. The steering rod hinge line 22 extends parallel to the hinge line 17, but does not coincide with it. In the embodiment shown, the steering rod hinge line 22 extends substantially at the same height as the hinge line 17, but closer to the main frame 2. Consequently, when the supporting arm 7 is tilted from the transport position to the operative position, the actuator 21 will protrude outward to a lesser extent. As a result, the second portion 20 will tilt relative to the first portion 19 and the relevant crop processing member 8 will move away from the first portion 19. As a result, during the tilting, it is possible to bring the axis 9 of the crop processing member 8 in a simple manner from a transport position to a particular, for example minimum, working width, so that the working width of the crop processing member 8 will increase.

Such an embodiment is in particular advantageous when, in the operative position, the axis 9 of the crop processing member 8 is tilted closer to the main frame 2 than in the smallest working width in the operative position. By correctly selecting the steering rod hinge line 22 relative to the hinge line 17, such a displacement of the crop processing member 8 during the transition from the operative position to the transport position or vice versa can be obtained automatically.

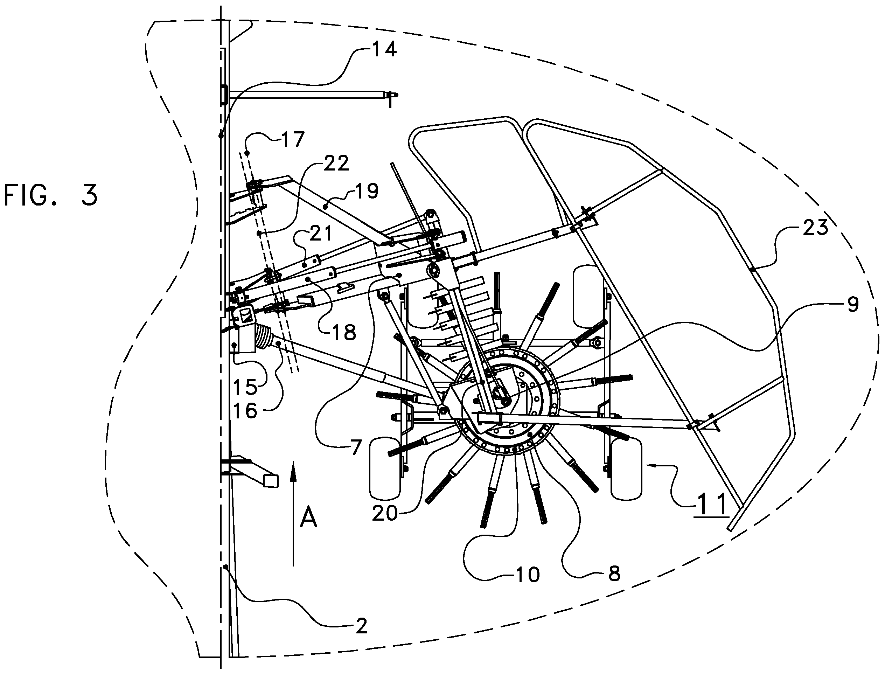

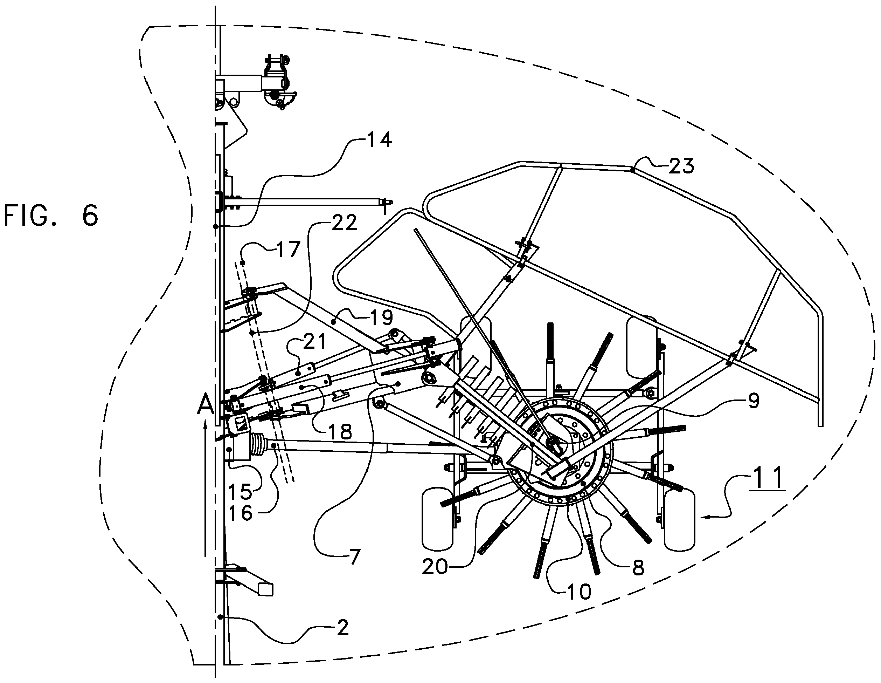

Subsequently, the working width can be adjusted further, if desired, by controlling the second actuator 21. Figure 6, for example, shows that the crop processing members 8, relative to the position shown in Figures 1 and 3, are placed in a larger working width by tilting the second portion 20 relative to the first portion 19. In order to change the working width, the piston rod of the second actuator 21 is withdrawn in order thus to place the axis 9 of the relevant crop processing member 8 further from the main frame 2.

It is pointed out that in the embodiment shown there is provided a second actuator 21 to adjust the working width of the crop processing members 8. During the displacement of the crop processing member 8 in the transition from the transport position to the operative position or vice versa, the second actuator 21 is not operated. This displacement is obtained by not having the hinge line 17 of the supporting arm and the steering rod hinge line 22 of the second actuator 21 coincide.

It is thus also possible to obtain the displacement during the tilting of the supporting arm 7 between the transport position and the operative position by disposing a steering rod which has a fixed length, but in this case it is no longer possible to adjust the working width of the crop processing member 8 in the operative position by means of the steering rod.

In general, it is desirable to dispose the axis 9 of the crop processing member 8 vertically in the operative position so that the rotatable crop processing member 8 rotates substantially in a horizontal plane. It is further desirable that the axis 9 of the processing member 8 extends horizontally in the transport position, so that the plane of rotation of the crop processing member 8 is disposed substantially vertically. In this position, the crop processing member 8 is least wide, which is important to keep the dimensions of the haymaking machine 1, in particular the width thereof, as limited as possible in the transport position.

In the embodiment shown, the first portion 19 and the second portion 20 of the supporting arm 7 are advantageously not disposed in the same plane. This may ensure that, despite the oblique hinge line 17, the crop processing member 8 will be placed in the desired position in the operative position as well as in the transport position.

The haymaking machine 1 comprises protective brackets 23 to protect the crop processing members 8 during use. These protective brackets 23 are capable of being folded in, in order to obtain a smaller maximum height in the transport position. Incidentally, it is pointed out that, in Figures 4 and 5, the protective brackets 23 are not folded in. It is obvious that, after the protective brackets 23 have been folded in, the crop processing members 8 will form the highest point of the haymaking machine 1 in the operative position. Each of the features of the invention makes it possible to place the crop processing members 8 in a relatively lower position, so that it is possible to stay within the laid down dimensions, even when larger crop processing members 8 are used.

## Claims

1. Haymaking machine (1) comprising:
- an elongate main frame (2) which has a front end (3) that is arranged to be attached to a pulling vehicle in order to move the haymaking machine (1) in a customary direction of travel,
- at least one crop processing member (8) which is rotatable about an axis (9), and
- a supporting arm (7) which is connected to the at least one crop processing member (8) and which is pivotably connected to the main frame (2)about a hinge line (17), wherein the crop processing member (8), by the pivoting movement of the supporting arm (7) about the hinge line (17), is at least displaceable between an operative position and a transport position,
wherein the supporting arm (7) comprises a first portion (19) and a second portion (20), wherein the first portion (19) is rotatably connected to the main frame (2) in order to be able to move the supporting arm (7) between the operative position and the transport position, and wherein the second portion (20) is tiltably attacheded to the first portion (19), and wherein by the tilting of the second portion (20) relative to the first portion (19) the distance between the axis (9) and the main frame (2) can be changed,
wherein a steering rod (21) is provided between the main frame (2) and the second portion (20), **characterised in that** a steering rod hinge line (22) of a pivot point between the steering rod (21) and the main frame (2) extends substantially parallel to, but does not coincide with, the hinge line (17) of the supporting arm (7), in such a manner that, by tilting the supporting arm (7) from the transport position to the operative position, the second portion (20) is tilted relative to the first portion (19) in order to move the crop processing member (8) over a particular distance away from the hinge line (17).

2. Haymaking machine (1) according to claim 1, wherein the steering rod is an actuator (21) which is arranged to set the position of the second portion (20) relative to the first portion (19).

3. Haymaking machine (1) according to claim 1, wherein the steering rod (21) has a fixed length.

## Patentansprüche

1. Heuerntemaschine (1) mit:
- einem langgestreckten Hauptrahmen (2), der ein vorderes Ende (3) besitzt, das für eine Befestigung an einem Zugfahrzeug eingerichtet ist, um die Heuerntemaschine (1) in eine übliche Fahrtrichtung zu bewegen,
- mindestens einem Erntegut-Verarbeitungselement (8), das um eine Achse (9) drehbar ist, und
- einem Trag- oder Lagerarm (7), der mit dem mindestens einem Erntegut-Verarbeitungselement (8) verbunden ist und um eine Gelenklinie (17) verschwenkbar mit dem Hauptrahmen (2) verbunden ist, wobei das Erntegut-Verarbeitungselement (8) durch die Schwenkbewegung des Trag- oder Lagerarms (7) um die Gelenklinie (17) mindestens zwischen einer Betriebsstellung und einer Transportstellung verlagerbar ist,
wobei
der Trag- oder Lagerarm (7) einen ersten Bereich (19) und einen zweiten Bereich (20) aufweist, der erste Bereich (19) verdrehbar mit dem Hauptrahmen (2) verbunden ist, um zu ermöglichen, dass der Trag- oder Lagerarm (7) zwischen der Betriebsstellung und der Transportstellung bewegt werden kann, und der zweite Bereich (20) verschwenkbar an dem ersten Bereich (19) befestigt ist und durch Verschwenken des zweiten Bereichs (20) relativ zu dem ersten Bereich (19) der Abstand zwischen der Achse (9) und dem Hauptrahmen (2) verändert werden kann, wobei eine Lenkstange (21) zwischen dem Hauptrahmen (2) und dem zweiten Bereich (20) vorgesehen ist,
**dadurch gekennzeichnet, dass**
sich eine Lenkstangen-Gelenklinie (22) einer Schwenkstelle zwischen der Lenkstange (21) und dem Hauptrahmen (2) so im Wesentlichen parallel zu der Gelenklinie (17) des Trag- oder Lagerarms (7) erstreckt, ohne mit dieser zusammenzufallen, dass durch Verschwenken des Trag- oder Lagerarms (7) von der Transportstellung in die Betriebsstellung der zweite Bereich (20) relativ zu dem ersten Bereich (19) verschwenkt wird, um das Erntegut-Verarbeitungselement (8) um einen bestimmten Abstand von der Gelenklinie (17) weg zu bewegen.

2. Heuerntemaschine (1) nach Anspruch 1, wobei die Lenkstange ein Aktuator (21) ist, der geeignet eingerichtet ist, um die Position oder Stellung des zweiten Bereichs (20) relativ zu dem ersten Bereich (19) vorzugeben oder zu fixieren.

3. Heuerntemaschine (1) nach Anspruch 1, wobei die Lenkstange (21) eine feste oder fixierte Länge hat.

## Revendications

1. Machine à fenaison (1) comprenant :
- un châssis principal allongé (2) qui a une extrémité avant (3) qui est agencée pour être attachée à un véhicule de traction afin de déplacer la machine à fenaison (1) dans une direction de déplacement habituelle,
- au moins un élément de traitement de récolte (8) qui est pivotant autour d'un axe (9), et
- un bras de support (7) qui est connecté à l'au moins un élément de traitement de récolte (8) et qui est connecté de manière pivotante au châssis principal (2) autour d'une charnière (17), dans laquelle l'élément de traitement de récolte (8), par le mouvement de pivotement du bras de support (7) autour de la charnière (17), est au moins déplaçable entre une position opérationnelle et une position de transport,
dans laquelle
le bras de support (7) comprend une première partie (19) et une seconde partie (20), dans lequel la première partie (19) est connectée de manière pivotante au châssis principal (2) afin de pouvoir déplacer le bras de support (7) entre la position opérationnelle et la position de transport, et dans lequel la seconde partie (20) est fixée de manière inclinable à la première partie (19), et dans lequel par l'inclinaison de la seconde partie (20) par rapport à la première partie (19) la distance entre l'axe (9) et le châssis principal (2) peut être changée,
dans laquelle une barre d'accouplement (21) est fournie entre le châssis principal (2) et la seconde partie (20), **caractérisée en ce qu'**une charnière de barre d'accouplement (22) d'un point pivot entre la barre d'accouplement (21) et le châssis principal (2) s'étend sensiblement parallèle à, mais ne coïncide pas avec, la charnière (17) du bras de support (7), de telle manière que, en inclinant le bras de support (7) de la position de transport à la position opérationnelle, la seconde partie (20) est inclinée par rapport à la première partie (19) afin d'éloigner l'élément de traitement de récolte (8) d'une distance particulière par rapport à la charnière (17).

2. Machine à fenaison (1) selon la revendication 1, dans laquelle la barre d'accouplement est un actionneur (21) qui est agencé pour régler la position de la seconde partie (20) par rapport à la première partie (19).

3. Machine à fenaison (1) selon la revendication 1, dans laquelle la barre d'accouplement (21) a une longueur fixe.
